# EUROPEAN PATENT SPECIFICATION

(11) **EP 2 973 955 B1**
(45) Date of publication and mention of the grant of the patent: **27.02.2019**
(21) Application number: 14708923.9
(22) Date of filing: 11.03.2014
(51) Int. Cl.: H02K 7/08, F16C 27/06, F16C 35/02

(54) **WINDSCREEN WIPER MOTOR**
SCHEIBENWISCHERMOTORS
MOTEUR D'ESSUIE-GLACE DE PARE-BRISE

(30) Priority: 13.03.2013 DE 102013102555
(43) Date of publication of application: 20.01.2016
(73) Proprietor: Valeo Systèmes d'Essuyage, 78322 Le Mesnil Saint Denis (FR)
(72) Inventor: STEFANI, Siegfried, 71739 Oberriexingen (DE); WONDRATSCHEK, Franck, 70376 Stuttgart (DE); HARTMAN, Werner, 71665 Vaihingen/Enz (DE)
(74) Representative: Callu-Danseux, Violaine
(86) International application number: PCT/EP2014/054753
(87) International publication number: WO 2014/140049

(56) References cited:
- EP-B1- 1 334 296
- DE-U1-202009 004 112
- GB-A- 2 008 863

## Description

### Prior art

The invention relates to a windscreen wiper motor according to the preamble of Claim 1, as is generally known from the prior art.

A windscreen wiper motor of this type essentially consists of a gearing housing for receiving a gearing with one or more stages, onto which gearing housing a driving motor, which is designed as an electric motor, is flange-mounted. The driving motor has an armature shaft with a worm toothing, which armature shaft projects into the gearing housing and meshes there with a gearwheel of the gearing. In order to absorb radial forces of the armature shaft, which act on the armature shaft via the gearwheel, the armature shaft is customarily mounted on both sides of the toothing region thereof in respective bearing elements within the gearing housing. Furthermore, the armature shaft on the driving motor, on the side facing away from the gearing housing, is supported in a further bearing. Whereas the bearing elements arranged on both sides of the driving motor are customarily designed as ball bearings or rolling contact bearings for absorbing radial forces and for absorbing axial forces, the third bearing element, which is arranged on that side of the toothing region which faces away from the driving motor, is customarily designed as a simple plain bearing, since the latter merely has to absorb radial forces which would result in a radial deflection of the armature shaft end during the meshing between the toothing of the armature shaft and the gearwheel.

A problem in the manufacturing of a windscreen wiper motor of this type and in the design of the mounting of the armature shaft is that the three bearing elements have to be arranged aligned as far as possible with the armature shaft so that, during the operation of the driving motor, no undesirable forces or friction losses, which reduce the efficiency of the windscreen wiper motor, arise because of an overdeterminacy of the bearing elements. It is therefore already customary in the prior art to arrange the bearing receptacles for the two bearing elements arranged on both sides of the driving motor in the gearing housing and the motor housing in highly precise alignment with one another by means of a machining manufacturing operation. By contrast, the radial receptacle of the third bearing element in the gearing housing is subject to certain tolerances.

During assembly of the windscreen wiper motor, when the driving motor is flange-mounted onto the gearing housing, the armature shaft is introduced into the gearing housing and the third element has to be fixed in a receptacle of the gearing housing. In order to compensate for dimensional tolerances or alignment errors, it is therefore known from the prior art to arrange the third bearing element in the receptacle by means of a compensating element having elastic properties. However, the installation of a compensating element of this type is frequently relatively complicated.

Attempts are known to resolve these difficulties, in particular GB 2008863A, DE 202009004112U1, and EP 1334296B1. All of these documents present means for compensating tolerances, with at least some of the disadvantageous aspects described above.

### Summary of the invention

Starting from the presented prior art, the invention is based on the object of developing a windscreen wiper motor according to the preamble of Claim 1 in such a manner that, firstly, alignment errors which are possibly present in the radial direction between the third bearing element and the receptacle in the gearing housing can be compensated for via the third bearing element, and that, secondly, the third bearing element can be installed in a particularly simple manner within the receptacle of the gearing housing. This object is achieved according to the invention in a windscreen wiper motor with the features of Claim 1 in that the receptacle is of cup-shaped design, has a, radially encircling the third bearing element, wall region and on the side facing the armature shaft, has a base section extending perpendicularly to the longitudinal axis of the armature shaft said base section having a passage opening for the passage of the armature shaft, in that the third bearing element is of cup-shaped design and has a base extending perpendicularly to the longitudinal axis of the armature shaft and a radially encircling wall arranged with a loose fit on the outer circumference of the shaft end of the armature shaft and, on the side facing the base section of the receptacle, bears, with the interposition of the compensating element, against said base section of the receptacle acting as an axial stop, in that force is applied to the base of the third bearing element in the direction of the armature shaft, by means of a clamping element, toward the compensating element, and in that a radial gap is formed between the third bearing element and the radially-encircling wall region of the receptacle, the compensating element projecting into the radial gap between the third earing element and the receptacle and, within the radial gap, being in contact both with the third bearing element and with the wall region of the receptacle.

According to the invention, the formation of the radial gap between the third bearing element and the receptacle therefore enables possibly present radial alignment errors between the individual bearing receptacles to be compensated for. Furthermore, a particularly simple axial fixing of the third bearing element within the receptacle is made possible, said fixing at the same time permitting tolerances to be compensated for by the third bearing element being placeable onto the shaft end with a radial loose fit. A loose fit is understood within the context of the invention as meaning that the third bearing element can be fitted axially onto the free shaft end of the armature shaft without any force or virtually without any force. In this state, force is applied to the third bearing element in the direction of the armature shaft by means of the clamping element, and therefore the clamping element forms an axial stop for the third bearing element on the side facing away from the armature shaft. At the same time, the third bearing element is pressed, with the interposition of the compensating element having elastic properties, in the other direction against an axial stop, and therefore the third bearing element is axially secured in both directions. A design of this type makes it possible, with a corresponding structural configuration, in particular to be able to fit the third bearing element only after the armature shaft is introduced into the gearing housing.

Advantageous developments of the windscreen wiper motor according to the invention are presented in the dependent claims.

In a preferred structural configuration, it is provided that in the installed state, the compensating element projects into the radial gap between the third bearing element and the receptacle and, within the radial gap, is in contact both with the third bearing element and with a wall region of the receptacle. As a result, the compensating element serves not only for the axial support of the third bearing element but also fixes the bearing element in the radial direction within the receptacle of the gearing housing, wherein possible alignment errors, i.e. non-central arrangements of the third bearing element within the receptacle, which customarily has a round cross section, can be compensated for by the flexible design of the compensating element.

In order in particular to be able to support the compensating element axially in the receptacle, it is provided that the compensating element is of annular design, has a passage opening for the passage of the armature shaft and, on the side facing away from the third bearing element, bears against that section of the receptacle which forms a penetration opening for the armature shaft.

A compensating element of this type having the required properties can be formed particularly simply and inexpensively when said compensating element is composed of rubber or of another elastic material.

A structurally particularly simple arrangement requiring few components is obtained when the third bearing element is of cup-shaped design with an end wall running perpendicularly to the longitudinal axis of the armature shaft, when an air gap is formed between the end wall and the shaft end, and when the end wall, on the side facing away from the shaft end, bears at least indirectly against the clamping element.

In order to avoid transverse forces on the third bearing element during the installation of the clamping element, which transverse forces could result in tilting or in the production of a radial force on the armature shaft, it is furthermore proposed that the contact surface between the clamping element and the end wall of the third bearing element is of punctiform design and is arranged on the longitudinal axis of the armature shaft.

In a structurally particularly simple and therefore preferred configuration of the clamping element, the clamping element is designed as a closure element for the receptacle and in that the clamping element is accommodated in an axially fixed manner in the receptacle by means of a press connection or clamping connection. The clamping element therefore carries out a dual function; firstly, the subjecting of the third bearing element to an axial force and, secondly, the closing of the receptacle in order to avoid media from entering the receptacle, with the risk of corresponding negative effects on the components arranged in the receptacle and in the gearing housing.

Further advantages, features and details of the invention emerge from the description below of preferred exemplary embodiments and with reference to the drawing, in which:
- Fig. 1: shows an exploded illustration of a windscreen wiper motor according to the invention with the essential parts thereof,
- Fig. 2: shows a longitudinal section through the fitted windscreen wiper motor according to Fig. 1, and
- Fig. 3: shows a longitudinal section in the region of a modified bearing receptacle.

Identical elements or elements having an identical function are provided with the same reference numbers in the figures.

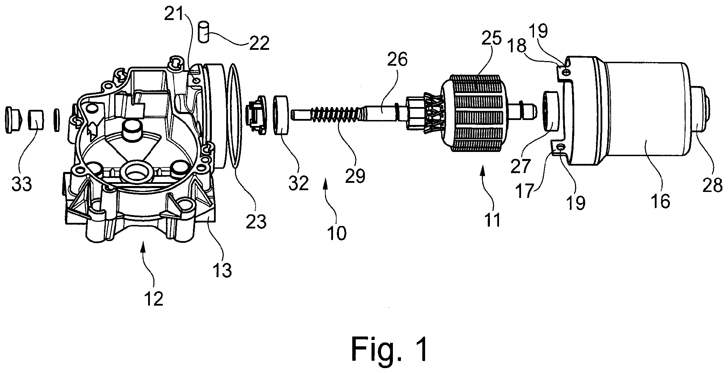

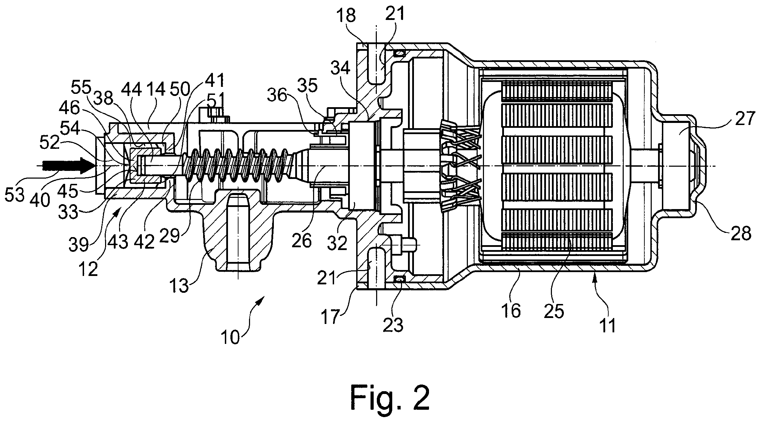

The windscreen wiper motor 10 according to the invention has a driving motor 11 which is designed as an electric motor and is flange-mounted onto a housing, which is designed as a gearing housing 12. In the exemplary embodiment illustrated, the gearing housing 12 is of two-part design and comprises a cup-shaped first housing part 13, which is particularly clearly visible in Fig. 1 and can be closed by a second housing part 14, which is merely visible in Fig. 2 and which is designed in particular in the form of a housing cover. This is customarily undertaken by means of screw connections which are not illustrated in detail. The gearing housing 12 is composed of plastic, for example, for weight reasons, and is in the form of an injection moulded part. However, the gearing housing may also be in the form of an aluminium die cast part. The driving motor 11 comprises a motor cup 16 which is preferably in the form of a deep-drawn part and is composed of sheet metal. In the exemplary embodiment illustrated, the motor cup 16 is fastened to the gearing housing 12 by means of two fastening sections 17, 18, which are arranged in the longitudinal direction of the motor cup 16 and are offset by 180° with respect to each other. For this purpose, the fastening sections 17, 18 have passage openings 19 which, when the motor cup 16 is mounted on the gearing housing 12, are aligned with openings 21 which are formed in the gearing housing 12 and into which fastening pins 22 (as illustrated) or fastening screws can be inserted from the outside in order to fix the motor cup 16 radially and axially on the gearing housing 12. In order to avoid media from entering the connecting region between the gearing housing 12 and the motor cup 16, a sealing element 23 in the form of an O ring is furthermore arranged between the gearing housing 12 and the motor cup 16.

An armature 25 of the driving motor 11, which armature is arranged non-rotatably on an armature shaft 26, is accommodated within the motor cup 16. On that side of the armature 25 which faces away from the gearing housing 12, the armature shaft 26 is accommodated via a first bearing element 27, which is preferably in the form of a ball bearing, in a bearing section 28 in the motor cup 16. The armature shaft 26 has an armature section which projects into the gearing housing 12 and has a toothing region in the form of a worm toothing 29 which meshes with a gearwheel (not illustrated) of a gearing which is arranged in the gearing housing 12 and has one or more stages.

It can be seen from an overall view of Figs. 1 and 2 that a second bearing element 32 and a third bearing element 33, which both serve for the mounting of the armature shaft 26, are arranged on both sides of the worm toothing 29.

The second bearing element 32, which is arranged within the gearing housing 12 on the side facing the motor cup 16, is preferably likewise in the form of a ball bearing and is accommodated fixed in a bearing receptacle 34, which is visible in Fig. 2, in the gearing housing 12. The bearing receptacle 34 radially surrounds the second bearing element 32 here. By means of a compensating element 35 which is of annular design and has latching hooks 36, the second bearing element 32 can be positioned and fixed axially in the gearing housing 12.

The third bearing element 33 is arranged in a cup-shaped receptacle 38 which is visible in particular with reference to Fig. 2, of the gearing housing 12. The cup-shaped receptacle 38 has a radially encircling wall region 39 and, on the side facing the armature shaft 26, a base section 41 which runs perpendicularly to the longitudinal axis 40 of the armature shaft 26 and has a passage opening 42 for the passage of the armature shaft 26. In particular, a radial gap is formed between the armature shaft 26 and the passage opening 42 in order to avoid the armature shaft 26 from entering into contact with passage opening 42.

The third bearing element 33 is of cup-shaped design and has a radially encircling wall 43 which forms a radial receptacle for the shaft end 44 of the armature shaft 26. The dimensioning or the inside diameter of the third bearing element 33 in the region of the wall 43 is matched to the diameter of the armature shaft 26 or of the shaft end 44 in such a manner that the third bearing element 33 can be pushed onto the shaft end 44 at least virtually without applying an axial force acting in the direction of the longitudinal axis 40 of the armature shaft 26. A radial and axial loose fit is therefore formed between the outer circumference of the shaft end 44 and the wall 43 of the third bearing element 33, and therefore the shaft end 44 can also rotate in the third bearing element 33 in a manner at least virtually free from friction.

An air gap is formed between the shaft end 44 and that end wall 46 of the third bearing element 33 which runs on the base 45 perpendicularly to the longitudinal axis 40 of the armature shaft 26. A compensating element 50 having elastic properties is arranged between that end side of the third bearing element 33 which is opposite the end wall 46 and the wall 39 of the receptacle 38. In the exemplary embodiment illustrated, the compensating element 50 is designed as a rubber disc with a centrally arranged passage opening 51 for the passage of the armature shaft 26. The compensating element 50 serves for the axial and radial compensation for the position of the third bearing element 33.

The receptacle 38 is closable by means of a stopper-shaped closure element 52 which acts as a clamping element for the third bearing element 33, and therefore the third bearing element 33 is pressed in the receptacle 38, with the interposition of the compensating element 50, against the base section 41 of the receptacle 38, the base section acting as an axial stop for the third bearing element 33. A press fit or clamping fit is formed between the closure element 52 and the receptacle 38, i.e. the closure element 52 is pressed in by application of an axial force 53 in the direction of the armature shaft 26, and is fixed there in a desired axial position. On the side facing the third bearing element 33, the closure element 52 has a conical shape, and therefore, when the closure element 52 has bearing contact with the third bearing element 33, a punctiform contact surface 54 arises, said contact surface preferably running on the longitudinal axis 40 of the armature shaft 26. When the closure element 52 is in contact with the third bearing element 33, the axial force 53 brings about an (elastic) deformation of the compensating element 50. The radially outer region of the compensating element 50 is displaced in the process into the radially encircling gap 55 formed between the third bearing element 33 and the wall 39 of the receptacle 38, in particular in such a manner that that region of the compensating element 50 which is displaced into the gap 55 is in bearing contact radially both with the third bearing element 33 and with the wall 39 of the receptacle 38. The compensating element 50 therefore brings about a radial support of the third bearing element 33 in the receptacle 38.

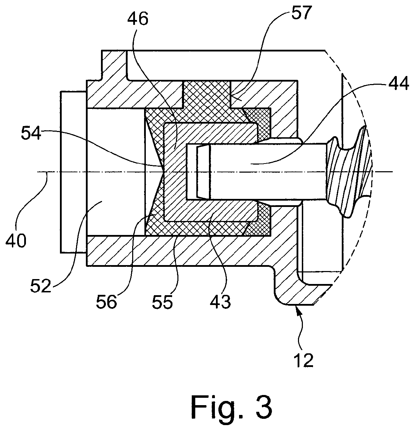

Fig. 3 illustrates a modified embodiment of the invention, in which, after the closure element 52 is placed into the receptacle 38, the receptacle 38 is filled with a filling compound 56. The filling compound 56 can be introduced into the receptacle 38 via a transverse bore 57 formed in the receptacle 38, wherein the filling compound 56 is composed, for example, of a plastics material which has been heated beyond the melting point thereof for the introduction into the receptacle 38. Alternatively, provision may also be made for the filling compound 56 to be in the form of a resin or the like. The filling compound 56 likewise serves to fix or support the third bearing element 33, which is in the form of a simple plain bearing, radially within the receptacle 38.

The windscreen wiper motor 10 described to this extent can be modified in diverse ways without departing from the inventive concept.

### List of reference numbers

- 10: Windscreen wiper motor
- 11: Driving motor
- 12: Gearing housing
- 13: Housing part
- 14: Housing part
- 16: Motor cup
- 17: Fastening section
- 18: Fastening section
- 19: Passage opening
- 21: Opening
- 22: Fastening pin
- 23: Sealing element
- 25: Armature
- 26: Armature shaft
- 27: Bearing element
- 28: Bearing section
- 29: Worm toothing
- 32: Bearing element
- 33: Bearing element
- 34: Bearing receptacle
- 35: Compensating element
- 36: Latching hook
- 38: Cup-shaped receptacle
- 39: Wall region
- 40: Longitudinal axis
- 41: Base section
- 42: Passage opening
- 43: Wall
- 44: Shaft end
- 45: Base
- 46: End wall
- 50: Compensating element
- 51: Passage opening
- 52: Closure element
- 53: Axial force
- 54: Contact surface
- 55: Gap
- 56: Filling compound
- 57: Transverse bore

## Claims

1. Windscreen wiper motor (10), with a gearing housing (12), and a driving motor (11), which projects with an armature shaft (26) into the housing (12), wherein three bearing elements (27, 32, 33) serving for the mounting of the armature shaft (26) are provided, and wherein the third bearing element (33) is arranged on the side facing away from the driving motor (11) in a receptacle (38) of the housing (12) in operative connection with a compensating element (50) having elastic properties,
wherein the receptacle (38) is of cup-shaped design, has a wall region (39) radially encircling the third bearing element (33) and on the side facing the armature shaft has a base section (41) extending perpendicularly to the longitudinal axis (40) of the armature shaft (26), said base section (41) having a passage opening (48) for the passage of the armature shaft (26), and wherein the third bearing element (33) is of cup-shaped design and has a base (45) extending perpendicularly to the longitudinal axis (40) of the armature shaft (26) and a radially encircling wall (43) arranged with a loose fit on the outer circumference of the shaft end (44) of the armature shaft (26) and, on the side facing the base section (41) of the receptacle (38), bears, with the interposition of the compensating element (50), against said base section (41) of the receptacle (38) acting as an axial stop, in that force is applied to the base (45) of the third bearing element (33) in the direction of the armature shaft (26), by means of a clamping element (52), toward the compensating element (50), and in that a radial gap (55) is formed between the third bearing element (33) and the radially-encircling wall region (39) of the receptacle (38), the compensating element (50) projecting into the radial gap (55) between the third bearing element (33) and the receptacle (38) and, within the radial gap (55), being in contact both with the third bearing element (33) and with the wall region (39) of the receptacle (38).

2. Windscreen wiper motor according to Claim 1,
**characterized in that**
the compensating element (50) is of annular design, has a passage opening (51) for the passage of the armature shaft (26) and, on the side facing away from the third bearing element (33), bears against that section (41) of the receptacle (38) which forms a penetration opening (42) for the armature shaft (26).

3. Windscreen wiper motor according to one of Claims 1 or 2,
**characterized in that**
the compensating element (50) is composed of rubber or of another elastic material.

4. Windscreen wiper motor according to one of Claims 1 to 3,
**characterized in that**
the third bearing element (33) is of cup-shaped design with an end wall (46) running perpendicularly to the longitudinal axis (40) of the armature shaft (26), **in that** an air gap is formed between the end wall (46) and the shaft end (44), and **in that** the third bearing element (33) on the side facing away from the shaft end (44), bears at least indirectly against the clamping element (52).

5. Windscreen wiper motor according to Claim 4,
**characterized in that**
the contact surface (54) between the clamping element (52) and the end wall (46) of the third bearing element (33) is of punctiform design and is arranged on the longitudinal axis (40) of the armature shaft (26).

6. Windscreen wiper motor according to one of Claims 1 to 5,
**characterized in that**
the clamping element (52) is designed as a closure element for the receptacle (38) and **in that** the clamping element (52) is accommodated in an axially fixed manner in the receptacle (38) by means of a press connection or clamping connection.

7. Windscreen wiper motor according to one of Claims 1 to 6,
**characterized in that**
a filling compound (56), in particular in the form of a plastics compound or a curing resin, is arranged within the radial gap (55) between the third bearing element (33) and the receptacle (38).

8. Windscreen wiper motor according to one of Claims 1 to 7,
**characterized in that**
the third bearing element (33) is designed as a plain bearing.

9. Windscreen wiper motor according to one of Claims 1 to 8,
**characterized in that**
the second and the third bearing element (32, 33) are arranged in the housing, which is designed as a gearing housing (12).

## Patentansprüche

1. Frontscheibenwischermotor (10) mit einem Getriebegehäuse (12) und einem Antriebsmotor (11), der mit einer Ankerwelle (26) in das Gehäuse (12) vorsteht, wobei drei zum Montieren der Ankerwelle (26) dienende Lagerelemente (27, 32, 33) bereitgestellt sind, und wobei das dritte Lagerelement (33) auf der dem Antriebsmotor (11) abgewandten Seite in einer Aufnahme (38) des Gehäuses (12) in operativer Verbindung mit einem Ausgleichselement (50), das elastische Eigenschaften aufweist, angeordnet ist,
wobei
die Aufnahme (38) von becherförmiger Gestaltung ist, eine Wandregion (39) aufweist, die das dritte Lagerelement (33) radial umgibt und auf der Seite, die der Ankerwelle zugewandt ist, einen Basisabschnitt (41) aufweist, der sich senkrecht zu der Längsachse (40) der Ankerwelle (26) erstreckt, wobei der Basisabschnitt (41) eine Durchgangsöffnung (48) für den Durchgang der Ankerwelle (26) aufweist, und wobei das dritte Lagerelement (33) von becherförmiger Gestaltung ist und eine Basis (45) aufweist, die sich senkrecht zu der Längsachse (40) der Ankerwelle (26) erstreckt, und eine radial umgebende Wand (43) mit einer losen Passung auf dem äußeren Umfang des Wellenendes (44) der Ankerwelle (26) angeordnet ist, und auf der dem Basisabschnitt (41) der Aufnahme (38) zugewandten Seite mit der Zwischenschaltung des Ausgleichselements (50) gegen den Basisabschnitt (41) der als ein axialer Anschlag agierenden Aufnahme (38) gelagert ist, dass auf die Basis (45) des dritten Lagerelements (33) in der Richtung der Ankerwelle (26) mittels eines Klemmelements (52) in Richtung des Ausgleichselements (50) eine Kraft angewendet wird, und dass zwischen dem dritten Lagerelement (33) und der radial umgebenden Wandregion (39) der Aufnahme (38) ein radialer Spalt (55) gebildet wird, wobei das Ausgleichselement (50) zwischen dem dritten Lagerelement (33) und der Aufnahme (38) in den radialen Spalt (55) vorsteht, wobei es innerhalb des radialen Spaltes (55) mit dem dritten Lagerelement (33) und mit der Wandregion (39) der Aufnahme (38) im Kontakt ist.

2. Frontscheibenwischermotor nach Anspruch 1,
**dadurch gekennzeichnet, dass**
das Ausgleichselement (50) von ringförmiger Gestaltung ist, eine Durchgangsöffnung (51) für den Durchgang der Ankerwelle (26) aufweist und auf der vom dritten Lagerelement (33) abgewandten Seite gegen jenen Abschnitt (41) der Aufnahme (38) gelagert ist, die eine Durchbruchsöffnung (42) für die Ankerwelle (26) bildet.

3. Frontscheibenwischermotor nach einem der Ansprüche 1 oder 2, **dadurch gekennzeichnet, dass** das Ausgleichselement (50) aus Gummi oder aus einem anderen elastischen Material besteht.

4. Frontscheibenwischermotor nach einem der Ansprüche 1 bis 3,
**dadurch gekennzeichnet, dass**
das dritte Lagerelement (33) von becherförmiger Gestaltung ist, wobei eine Abschlusswand (46) senkrecht zu der Längsachse (40) der Ankerwelle (26) verläuft, dadurch, dass der Luftspalt zwischen der Abschlusswand (46) und dem Wellenende (44) gebildet wird, und dadurch, dass das dritte Lagerelement (33) auf der von dem Wellenende (44) abgewandten Seite mindestens indirekt gegen das Klemmelement (52) gelagert ist.

5. Frontscheibenwischermotor nach Anspruch 4,
**dadurch gekennzeichnet, dass**
die Kontaktoberfläche (54) zwischen dem Klemmelement (52) und der Abschlusswand (46) des dritten Lagerelements (33) von punktiformer Gestaltung ist und auf der Längsachse (40) der Ankerwelle (26) angeordnet ist.

6. Frontscheibenwischermotor nach einem der Ansprüche 1 bis 5,
**dadurch gekennzeichnet, dass**
das Klemmelement (52) als ein Abschlusselement für die Aufnahme (38) gestaltet ist, und dadurch, dass das Klemmelement (52) in einer axial befestigten Weise mittels einer Pressverbindung oder einer Klemmverbindung in der Aufnahme (38) untergebracht ist.

7. Frontscheibenwischermotor nach einem der Ansprüche 1 bis 6,
**dadurch gekennzeichnet, dass**
eine Füllmasse (56), insbesondere in der Form einer Kunststoffmasse oder eines aushärtenden Harzes, in dem radialen Spalt (55) zwischen dem dritten Lagerelement (33) und der Aufnahme (38) angeordnet ist.

8. Frontscheibenwischermotor nach einem der Ansprüche 1 bis 7,
**dadurch gekennzeichnet, dass**
das dritte Lagerelement (33) als ein Gleitlager gestaltet ist.

9. Frontscheibenwischermotor nach einem der Ansprüche 1 bis 8,
**dadurch gekennzeichnet, dass**
das zweite und das dritte Lagerelement (32, 33) in dem Gehäuse angeordnet sind, das als ein Lagergehäuse (12) gestaltet ist.

## Revendications

1. Moteur (10) d'essuie-glace de pare-brise, comprenant un carter d'engrenage (12) et un moteur d'entraînement (11), qui fait saillie avec un arbre d'induit (26) dans le carter (12), trois éléments de palier (27, 32, 33) servant à monter l'arbre d'induit (26) étant prévus, et le troisième élément de palier (33) étant disposé sur le côté opposé au moteur d'entraînement (11) dans un logement (38) du carter (12) en liaison fonctionnelle avec un élément de compensation (50) ayant des propriétés élastiques,
le logement (38) étant en forme de coupelle, ayant une région de paroi (39) entourant radialement le troisième élément de palier (33) et sur le côté tourné vers l'arbre d'induit, ayant une section de base (41) s'étendant perpendiculairement à l'axe longitudinal (40) de l'arbre d'induit (26), ladite section de base (41) ayant une ouverture de passage (48) pour le passage de l'arbre d'induit (26), et le troisième élément de palier (33) étant en forme de coupelle et ayant une base (45) s'étendant perpendiculairement à l'axe longitudinal (40) de l'arbre d'induit (26) et une paroi (43) radialement entourante disposée en ajustement libre sur la circonférence externe de l'extrémité (44) d'arbre de l'arbre d'induit (26) et, du côté faisant face à la section de base (41) du logement (38), reposant, avec interposition de l'élément de compensation (50), contre ladite section de base (41) du logement (38) agissant comme butée axiale, en ce qu'une force est appliquée à la base (45) du troisième élément de palier (33) dans la direction de l'arbre d'induit (26), au moyen d'un élément de serrage (52) vers l'élément de compensation (50), et en ce que'un espace radial (55) est formé entre le troisième élément de palier (33) et la région de paroi (39) radialement entourante du logement (38), l'élément de compensation (50) faisant saillie dans l'espace radial (55) entre le troisième élément de palier (33) et le logement (38), et dans l'espace radial (55), étant en contact à la fois avec le troisième élément de palier (33) et la région de paroi (39) du logement (38).

2. Moteur d'essuie-glace de pare-brise selon la revendication 1, **caractérisé en ce que** l'élément de compensation (50) est de forme annulaire, a une ouverture de passage (51) pour le passage de l'arbre d'induit (26) et, du côté opposé au troisième élément de palier (33), repose contre la section (41) du logement (38) qui forme une ouverture de pénétration (42) pour l'arbre d'induit (26) .

3. Moteur d'essuie-glace de pare-brise selon la revendication 1 ou 2, **caractérisé en ce que** l'élément de compensation (50) est composé de caoutchouc ou d'un autre matériau élastique.

4. Moteur d'essuie-glace de pare-brise selon l'une des revendications 1 à 3, **caractérisé en ce que** le troisième élément de palier (33) est en forme de coupelle avec une paroi d'extrémité (46) s'étendant perpendiculairement à l'axe longitudinal (40) de l'arbre d'induit (26), **en ce qu'**un entrefer est formé entre la paroi d'extrémité (46) et l'extrémité (44) d'arbre, et **en ce que** le troisième élément de palier (33) du côté opposé à l'extrémité (44) d'arbre, repose au moins indirectement contre l'élément de serrage (52).

5. Moteur d'essuie-glace de pare-brise selon la revendication 4, **caractérisé en ce que** la surface de contact (54) entre l'élément de serrage (52) et la paroi d'extrémité (46) du troisième élément de palier (33) est de conception punctiforme et est disposée sur l'axe longitudinal (40) de l'arbre d'induit (26).

6. Moteur d'essuie-glace de pare-brise selon l'une des revendications 1 à 5, **caractérisé en ce que** l'élément de serrage (52) est conçu comme élément de fermeture pour le logement (38) et **en ce que** l'élément de serrage (52) est logé de manière axialement fixe dans le logement (38) au moyen d'une liaison par pression ou d'une liaison par serrage.

7. Moteur d'essuie-glace de pare-brise selon l'une des revendications 1 à 6, **caractérisé en ce qu'**un composé de remplissage (56), en particulier sous la forme d'un composé plastique ou d'une résine durcissable, est disposé dans l'espace radial (55) entre le troisième élément de palier (33) et le logement (38).

8. Moteur d'essuie-glace de pare-brise selon l'une des revendications 1 à 7, **caractérisé en ce que** le troisième élément de palier (33) est conçu comme un palier lisse.

9. Moteur d'essuie-glace de pare-brise selon l'une des revendications 1 à 8, **caractérisé en ce que** les deuxième et troisième éléments de palier (32, 33) sont disposés dans le carter, qui est conçu comme carter d'engrenage (12) .
